(19) Europäisches Patentamt
European Patent Office
Office européen des brevets

(11) Publication number: 0 055 898
B1

(12) # EUROPEAN PATENT SPECIFICATION

(45) Date of publication of patent specification: 19.11.87

(51) Int. Cl.$^4$: B 29 C 71/04, C 08 G 69/48

(21) Application number: 81305715.5

(22) Date of filing: 03.12.81

(54) Radiation cross-linking of polyamides.

(30) Priority: 03.12.80 US 212483

(43) Date of publication of application:
14.07.82 Bulletin 82/28

(45) Publication of the grant of the patent:
19.11.87 Bulletin 87/47

(84) Designated Contracting States:
AT BE CH DE FR IT LI NL SE

(56) References cited:
DE-A-1 569 349
DE-A-2 041 989
GB-A-1 116 879
GB-A-1 184 599

(73) Proprietor: RAYCHEM CORPORATION
300 Constitution Drive
Menlo Park California 94025 (US)

(72) Inventor: Dieck, Ronald Lee
881 Rubis Drive
Sunnyvale, CA 94087 (US)
Inventor: Richards, James Aaron
833 Cottonwood Drive
Cupertino, CA 95014 (US)

(74) Representative: Jay, Anthony William et al
Raychem Limited Intellectual Property Law
Department Swan House 37-39 High Holborn
London WC1 (GB)

EP 0 055 898 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to articles, especially heat-recoverable articles, made from radiation cross-linked polyamides.

Various attempts have been made to use radiation to cross-link polyamides or to graft-polymerise monomers onto polyamides. Reference may be made, for example to U.S. Patents Nos. 2,858,259, 2,965,553 and 3,681,216 and U.K. Patent No. 1,184,599. However, the known methods suffer from serious disadvantages, for example failure to produce adequate cross-linking, excessive degradation of the polyamide, and impractical processing techniques. As a result, heat-recoverable articles made from cross-linked polyamides have not been available.

We have now discovered that polyundecanoamide and polydodecanoamide (referred to herein as Nylon-11 and Nylon-12 respectively), and copolymers and polymer blends containing substantial proportions of Nylon-11 and Nylon-12, can readily be cross-linked by means of ionizing radiation in the presence of unsaturated radiation cross-linking agents, and that very useful heat-shrinkable articles can be made from the cross-linked products. The cross-linking process can be carried out in air and excellent results can be obtained using small amounts of cross-linking agent and low radiation dosages.

In one aspect, the present invention provides an article, especially a heat-recoverable article, composed of a radiation cross-linked polymeric composition which (a) has been cross-linked by radiation in the presence of an unsaturated radiation cross-linking agent, (b) has an $M_{100}$ value above its melting point of at least 2.1 kg/cm$^2$, preferably 2.1 to 10.5 kg/cm$^2$, especially 2.6 to 4.2 kg/cm$^2$, and (c) comprises a cross-linked organic polymer component which comprises at least 80%, preferably substantially 100%, by weight of at least one polyamide consisting essentially of monomer units which are linked to each other through amide linkages, at least 25%, preferably at least 75%, by weight of the monomer units having the formula

$$—NH—(CH_2)_p—CO—$$

where p is 10 or 11.

In another aspect, the invention provides a process for the manufacture of a cross-linked polyamide article as defined above which comprises the steps of

(1) melt-shaping a polymeric composition comprising
  (a) an organic polymer component which comprises at least 80% by weight of at least one polyamide consisting essentially of monomer units which are linked to each other through amide linkages, at least 25%, preferably at least 75%, by weight of the monomer units having the formula $—NH—(CH_2)_p—CO—$, where p is 10 or 11; and
  (b) an unsaturated radiation cross-linking agent for said polymer component; and
(2) irradiating the shaped article prepared in step (1) to effect cross-linking thereof.

A preferred embodiment of the process further comprises the steps of (3) heating the cross-linked article above its melting point; (4) deforming the article while it is at a temperature above its melting point; and (5) cooling the article while it is in the deformed condition; whereby a heat-recoverable article is prepared.

The organic polymer component used in this invention comprises at least 80%, usually at least 90%, preferably at least 95%, especially substantially 100%, of one or more polyamides in which substantially all the monomer units are linked to each other through amide linkages. (Percentages are by weight throughout this specification). Thus the component may (but preferably does not) contain a small proportion of one or more other compatible polymers, e.g. polyethylene. The polyamide contains at least 25%, preferably at least 75%, based on the component, of Nylon-11 and/or Nylon-12 units, i.e. units of the formula $—NH—(CH_2)_p—CO—$, where p is 10 or 11. These units may be present as a homopolymer, or as part of a copolymer, or both. Thus the polymer component may contain 25 to 100%, preferably 75 to 100%, of Nylon-11 or Nylon-12 or both, and 0 to 75%, preferably 0 to 25% of another polyamide, preferably Nylon-6, Nylon 6,6, Nylon-6,9, Nylon 6,10 or Nylon-6,12 or two or more of these.

Cross-linking agents for use in this invention are usually compounds incorporating elements selected from carbon, hydrogen, oxygen and nitrogen. The preferred cross-linking agent is triallyl isocyanurate, which we have found to give particularly good results even when used in small amounts and at low radiation doses. Triallyl cyanurate is also very useful, especially when used under conditions which cause isomerisation to the isocyanurate. Mixtures of cross-linking agents can be used. The amount of cross-linking agent used is preferably less than 4%, e.g. 0.1 to 4%, particularly less than 2%, e.g. 0.1 to 2% especially about 1% e.g. 0.3 to 1.25%, by weight, based on the weight of the organic polymer component.

The polymeric composition may contain other ingredients in addition to the polymer component and the cross-linking agent (or residue thereof after radiation cross-linking). For example the composition may contain organic and/or inorganic flame retardants, fillers, processing aids and antioxidants. The amount of such additives may be for example up to 60% by weight of the composition, e.g. 10 to 40%. Care should be taken to avoid the use of excessive amounts of antioxidants and other additives which inhibit cross-linking

and make it necessary to use larger amounts of cross-linking agent and/or higher radiation dosages. It is an additional surprising feature of this invention that even composition containing relatively large amounts of antioxidant, e.g. 1 to 3% of the composition, can be successfully cross-linked.

Compounds which are useful as flame retardants in this invention include both halogen-containing and halogen-free retardant systems. In one embodiment the composition contains 15 to 35%, e.g. about 25%, of a halogenated, preferably brominated, organic flame retardant and 5 to 15%, e.g. about 10%, of an inorganic synergist therefor, preferably antimony trioxide, and optionally other flame retardants. In another embodiment the composition is substantially free of halogen and contains an effective amount of non-halogenated flame retardants, e.g. one or more of

(a) a particulate salt in which the anion comprises oxygen and the cation is a metal of Group II A of the Periodic Table, e.g. basic magnesium carbonate, talc;
(b) a particulate salt in which the anion comprises boron and oxygen and the cation is a metal of Group II B of the Periodic Table, e.g. zinc borate;
(c) a particulate compound of an element of Group IV or V of the Periodic Table, e.g. antimony trioxide; and
(d) a particulate sulfide of a transition metal, e.g. zinc sulfide.

We have found that excellent results can be obtained using radiation dosages of at most 12 Mrad, and often less, eg. at most 8 Mrad or at most 6 Mrad. In order to obtain a particular degree of cross-linking, the radiation dose required is dependent on the amount and type of cross-linking agent present. The cross-linking agent and radiation dose are selected so that the cross-linked article has an $M_{100}$ value above its melting point, of at least 2.1 kg/cm$^2$, generally 2.1 to 10.5 kg/cm$^2$, preferably 2.6 to 4.2 kg/cm$^2$, and/or an $E_{30}$ value above its melting point, of at least 5.6 kg/cm$^2$, preferably 5.6 to 17.5 kg/cm$^2$. The $M_{100}$ and $E_{30}$ values referred to herein are measured by a modulus test carried out at an elevated temperature above the melting point of the article, i.e. after melting is completed and, if the article is heat-recoverable, after it has been heat-recovered in the absence of any restraint. In this test, the stress required to elongate a specimen of the cross-linked article by 30 and 100% is measured, using an Instron tester at a crosshead speed of 5.1 cm (2 inch)/minute, a jaw separation of 4.8 cm (1.9 inch) and a chart speed of 12.7 cm (5 inch/minute. A specimen, usually a strip 0.6 or 1.27 cm (0.25 or 0.5 inch) wide, cut from the cross-linked article is clamped at the top and allowed to equilibrate at the elevated temperature, and the lower end is then clamped. The force required to elongate the specimen to 30% and to 100% is recorded. The $E_{30}$ and $M_{100}$ values are then calculated as follows

$$E_{30} = \frac{\text{Force at 30\% elongation}}{\text{Initial cross-sectional area of specimen}} \times \frac{1.30}{0.30}$$

$$M_{100} = \frac{\text{Force at 100\% elongation}}{\text{Initial cross-sectional area of specimen}}$$

Articles prepared by cross-linking according to the invention can readily be converted into heat-recoverable articles by methods well known in the art. Preferred recoverable articles of the invention are hollow and heat-shrinkable, eg. tubing. Such an article may contain or have a coating on at least a part of its inner surface of a material which flows at the recovery temperature of the article, eg. Nylon-12 which is substantially free from cross-linking or has been cross-linked only to a limited extent which does not prevent it from flowing at the recovery temperature.

The invention is illustrated by the following Examples, which are summarised in Table 1, 2, 3 and 4 below, Examples 1, 2 and 16 being comparative Examples outside the scope of the invention.

In each of the Examples, the indicated amounts (in parts by weight) of the indicated ingredients were mixed together in a ZSK extruder, extruded into a water bath and cut into pellets. After drying, the pellets were melt-shaped, in Examples 1 to 23 into slabs 15.2×15.2×0.0635 cm (6.0×6.0×0.025 inch), using a heated press at 2100 kg/cm$^2$ (30,000 psi) pressure and a temperature 200°C, and in Examples 24 to 36 into tubing having an internal diameter of 0.32 cm (0.125 inch) and a wall thickness of 0.056 cm (0.022 inch), using a single screw extruder. The shaped articles were then irradiated to the indicated dose, using a beam of high energy electrons. The indicated properties of the cross-linked product were then measured. The cross-linked tubing produced in Examples 24 to 26 was converted into heat-shrinkable tubing by expanding it to an internal diameter of 0.635 cm (0.25 inch) in a glycerine bath.

The Nylon-11 used in Examples 1 to 15 and 20—26 was the product sold by Rilsan Corporation under the trade name BESNO, which is believed to be substantially pure polyundecanoamide. The plasticised Nylon-11 used in Examples 27 and 28 was the product sold by Rilsan Corporation under the trade name BESNO-P40 which is a plasticised polyundecanoamide. The stabilized Nylon-11 used in Examples 29 to 36 was the product sold by Rilsan Corporation under the trade name BESNO-TL, which is a light- and heat-stabilized polyundecanoamide. The Nylon-12 used in Examples 16 to 19 was the product sold by Huls

under the trade name L-2101, which is believed to be substantially pure polydodecanoamide. The antioxidant used in Examples 37 to 39, Cyanox® 1212, is available from American Cyanamid and is believed to be a mixture of distearyl thio-di-propionate and dilauryl thio-di-propionate. The antioxidant used in Example 37, Goodrite® 3114, is available from B. F. Goodrich and is tris (3,5-di-t-butyl-4-hydroxybenzyl) isocyanurate. The antioxidant used in Example 38, Goodrite® 3125, is available from B. F. Goodrich and is 3,5-di-t-butyl-4-hydroxyhydrocinnamic acid triester with 1,3,5-tris (2 hydroxyethyl)-S-triazine-2,4,6 (1*H*,3*H*,5*H*-trione). The antioxidant used in Example 39, Irganox® 1010, is available from Ciba-Geigy and is tetrakis[methylene 3-(3[1],5[1]-di-t-butyl-4[1]-hydroxyphenyl) propionate]methane.

TABLE 1

| Example No. | 1(c) | 2(c) | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Nylon-11 | 99 | 100 | 99 | 99 | 99 | 99 | 99 | 98 | 98 | 98 | 98 | 96 | 99 | 98 | 96 |
| Triallyl isocyanurate | 1 | — | 1 | 1 | 1 | 1 | 1 | 2 | 2 | 2 | 2 | 4 | — | — | — |
| Triallyl cyanurate | — | — | — | — | — | — | — | — | — | — | — | — | 1 | 2 | 4 |
| Radiation Dose (Mrad) | 0 | 10 | 0.5 | 1 | 2 | 4 | 10 | 0.5 | 1 | 2 | 10 | 10 | 10 | 10 | 10 |
| $M_{100}$ at 200°C (kg/cm$^2$) | melted | melted | 5.0 | 9.1 | 10.7 | 10.4 | 11.0 | 5.5 | 8.2 | 9.6 | 10.9 | 25.3 | 3.2 | 9.8 | 9.8 |

TABLE 2

| Example No. | 16(c) | 17 | 18 | 19 |
|---|---|---|---|---|
| Nylon-12 | 100 | 99 | 98 | 96 |
| Triallyl isocyanurate | 0 | 1 | 2 | 4 |
| Radiation Dose (Mrad) | 10 | 10 | 10 | 10 |
| $M_{100}$ at 200°C (kg/cm$^2$) | melted | 9.1 | 14.9 | 28.4 |

TABLE 3

| Example No. | 20 | 21 | 22 | 23 |
|---|---|---|---|---|
| Nylon-11 | 80 | 82 | 82 | 82 |
| Antimony trioxide | 5 | 5 | 5 | 5 |
| Magnesium Carbonate | 7 | — | — | — |
| Zinc Borate | 5 | — | — | — |
| Bromine-containing organic flame retardant | — | 10 | 10 | 10 |
| Triallyl isocyanurate | 3 | 3 | 3 | 3 |
| Radiation Dose (Mrad) | 10 | 10 | 10 | 10 |
| $M_{100}$ at 200°C (kg/cm$^2$) | 13.5 | 11.7 | 11.7 | 11.4 |
| Oxygen Index | 23 | 24.5 | 22 | 25 |

TABLE 4

| Example No. | 24 | 25 | 26 | 27 | 28 | 29 | 30 | 31 | 32 | 33 | 34 | 35 | 36 |
|---|---|---|---|---|---|---|---|---|---|---|---|---|---|
| Nylon-11 | 97 | 97 | 97 | — | — | — | — | — | — | — | — | — | — |
| Plasticised Nylon-11 | — | — | — | 98 | 98 | — | — | — | — | — | — | — | — |
| Stabilised Nylon-11 | — | — | — | — | — | 97 | 97 | 97 | 97 | 98 | 98 | 98 | 99 |
| Triallyl isocyanurate | 3+ | 3+ | 3+ | 2 | 2 | 3+ | 3+ | 3+ | 3+ | 2 | 2 | 2 | 1 |
| Radiation Dose | 6 | 1.8 | 0.64 | 3.5 | 10.8 | 8 | 3.2 | 2.0 | 1.8 | 2.3 | 1.6 | 3.5 | 6.7 |
| $E_{30}$ at 200°C ($kg/cm^2$) | 31.9 | 26.0 | 15.8 | 5.5 | 5.3 | 20.8 | 14.4 | 10.1 | 9.9 | 11.9 | 9.1 | 14.4 | 7.6 |
| $M_{100}$ at 200°C ($kg/cm^2$) | — | 13.2 | 8.5 | 3.4 | 2.4 | 10.2 | 7.6 | 5.3 | 5.3 | — | — | — | 3.2 |

TABLE 5

| Example No. | 37 | 38 | 39 |
|---|---|---|---|
| Stabilised Nylon-11 | 95.5 | 95.5 | 95.5 |
| Triallyl isocyanurate | 3 | 3 | 3 |
| Antioxidant Cyanox® 1212 | 0.5 | 0.5 | 0.5 |
| Goodrite® 3114 | 1 | — | — |
| Goodrite® 3125 | — | 1 | — |
| Irganox® 1010 | — | — | 1 |
| Radiation Dose (Mrad) | 18 | 18 | 18 |
| $M_{100}$ at 200°C ($kg/cm^2$) | 7.1 | 19.5 | 8.5 |

**Claims**

1. An article, especially a heat-recoverable article, composed of a radiation cross-linked polymeric composition which

(a) has been cross-linked by radiation in the presence of an unsaturated radiation cross-linking agent,
(b) has an $M_{100}$ value above its melting point of at least 2.1 kg/cm², preferably 2.1 to 10.5 kg/cm², particularly 2.6 to 4.2 kg/cm², and
(c) comprises a cross-linked organic polymer component which comprises at least 80%, preferably substantially 100%, by weight of at least one polyamide consisting essentially of monomer units which are linked to each other through amide linkages, at least 25%, preferably at least 75%, by weight of the monomer units having the formula

$$—NH—(CH_2)_p—CO$$

where p is 10 or 11.

2. An article according to Claim 1 wherein the polymer component consists essentially of 75 to 100% by weight of Nylon-11 or Nylon-12 or a mixture thereof and 0 to 25% by weight of Nylon-6, Nylon-6,6, Nylon 6,9, Nylon 6,10, or Nylon 6,12 or a blend of two or more of these.

3. An article according to Claim 1 or 2 which is hollow and heat-shrinkable and which has a coating on its inner surface of a material which flows at the recovery temperature of the article.

4. A process for the manufacture of a cross-linked article as claimed in any one of claims 1 to 3, which process comprises the steps of

(1) melt-shaping a polymeric composition comprising
(a) an organic polymer component which comprises at least 80%, preferably at least 90% by weight of at least one polyamide consisting essentially of monomer units which are linked to each other through amide linkages, at least 25%, preferably at least 75%, by weight of the monomer units having the formula

$$—NH—(CH_2)_p—CO—$$

where p is 10 or 11; and
(b) an unsaturated radiation cross-linking agent for said polymer; and
(2) irradiating the shaped article prepared in step (1) to effect cross-linking thereof.

5. A process according to Claim 4 wherein the irradiation is carried out in air.

6. A process according to Claim 4 or 5 wherein the cross-linking agent is a compound incorporating elements selected from carbon, hydrogen, oxygen and nitrogen, especially triallyl isocyanurate or triallyl cyanurate or a mixture thereof.

7. A process according to Claim 4, 5 or 6 wherein the amount of said cross-linking agent is less than 4%, preferably less than 2%, by weight, based on the weight of the organic polymer component.

8. A process according to Claim 7 wherein the shaped article is irradiated to a dose of at most 12 Mrad, preferably at most 8 Mrad.

9. A process according to any one of claims 4 to 8 which further comprises the steps of

(3) heating the cross-linked article above its melting point;
(4) deforming the article while it is at a temperature above its melting point; and
(5) cooling the article while it is in the deformed condition;

whereby a heat-recoverable article is prepared.

**Patentansprüche**

1. Gegenstand, insbesondere wärmerückstellbarer Gegenstand, zusammengesetzt aus einer strahlungsvernetzten polymeren Zusammensetzung, welche

(a) durch Strahlung in Gegenwart eines ungesättigten Strahlungsvernetzungsmittels strahlungsvernetzt worden ist,
(b) einen $M_{100}$-Wert oberhalb seines Schmelzpunkts von wenigstens 2,1 kg/cm², vorzugsweise 2,1 bis 10,5 kg/cm², insbesondere 2,6 bis 4,2 kg/cm² aufweist und
(c) eine vernetzte organische polymere Komponente enthält, welche wenigstens 80%, vorzugsweise im wesentlichen 100%, nach dem Gewicht wenigstens eines Polyamids umfasst, das im wesentlichen aus Monomereinheiten besteht, welche miteinander durch Amidbindungen verbunden sind, wobei wenigstens 25%, vorzugsweise wenigstens 75%, nach dem Gewicht der Monomereinheiten die Formel

$$—NH—(CH_2)_p—CO$$

worin p 10 oder 11 ist, aufweisen.

2. Gegenstand nach Anspruch 1, worin die polymere Komponente im wesentlichen zu 75 bis 100 Gew.-% aus Nylon-11 oder Nylon-12 oder einer Mischung davon und zu 0 bis 25 Gew.-% aus Nylon-6, Nylon-6,6, Nylon-6,9, Nylon-6,10 oder Nylon-6,12 oder Mischung zweier oder mehrerer davon besteht.

3. Gegenstand nach Anspruch 1 oder 2, welcher hohl und wärmerückstellbar ist und welcher auf seiner inneren Oberfläche eine Beschichtung aus einem Material aufweist, welches bei der Rückstelltemperatur des Gegenstandes fliesst.

4. Verfahren zur Herstellung eines vernetzten Gegenstandes, wie in einem der Ansprüche 1 bis 3 beansprucht, welches Verfahren die Schritte umfasst

(1) Schmelz-Formen einer polymere Zusammensetzung, welche enthält:
(a) eine organische polymere Komponente, welche umfasst wenigstens 80%, vorzugsweise wenigstens 90%, nach dem Gewicht wenigstens eines Polyamides, das im wesentlichen aus monomeren Einheiten besteht, die durch Amidbindungen miteinander verbunden sind, wobei wenigstens 25%, vorzugsweise wenigstens 75%, nach dem Gewicht der Monomereinheiten die Formel

$$—NH—(CH_2)_p—CO—$$

worin p 10 oder 11 ist, aufweisen; und
(b) ein ungesättigtes Strahlungsvernetzungsmittel für das Polymer; und
(2) Bestrahlen des in Schritt (1) hergestellten Formteils, um seine Vernetzung zu bewirken.

5. Verfahren nach Anspruch 4, worin die Bestrahlung an Luft durchgeführt wird.

6. Verfahren nach Anspruch 4 oder 5, worin das Vernetzungsmittel eine Verbindung ist, welche aus Kohlenstoff, Wasserstoff, Sauerstoff und Stickstoff ausgewählte Elemente enthält, insbesondere Triallylisocyanurat oder Triallylcyanurat oder eine Mischung davon.

7. Verfahren nach Anspruch 4, 5 oder 6, worin die Menge des Vernetzungsmittels weniger als 4%, vorzugsweise weniger als 2% nach dem Gewicht, bezogen auf das Gewicht der organischen polymeren Komponente, beträgt.

8. Verfahren nach Anspruch 7, worin das Formteil bis zu einer Dosis von höchstens 12 Mrad, vorzugsweise höchstens 8 Mrad, bestrahlt wird.

9. Verfahren nach einem der Ansprüche 4 bis 8, welches weiterhin die Schritte umfasst:

(3) Erhitzen des vernetzten Gegenstandes über seinen Schmelzpunkt;
(4) Deformieren des Gegenstandes, solange er eine Temperatur oberhalb seines Schmelzpunktes aufweist; und
(5) Abkühlen des Gegenstandes, während er sich im deformierten Zustand befindet;

wodurch ein wärmerückstellbarer Gegenstand hergestellt wird.

**Revendications**

1. Article, en particulier un article à thermorétablissement, composé d'une composition polymère réticulée par radiation qui:

(a) a été réticulée par radiation en présence d'un agent insaturé de réticulation par radiation,

(b) a une valeur $M_{100}$ au-dessus de son point de fusion d'au moins 2,1 kg/cm$^2$, de préférence de 2,1 à 10,5 kg/cm$^2$ et en particulier de 2,6 à 4,2 kg/cm$^2$, et

(c) comprend un composant polymère organique réticulé qui comprend au moins 80%, de préférence pratiquement 100% en poids d'au moins un polyamide constitué essentiellement de motifs monomères qui sont liés les uns aux autres par des liaisons amides, au moins 25%, de préférence au moins 75% en poids des motifs monomères ayant pour formule:

$$—NH—(CH_2)_p—CO—$$

dans laquelle p est 10 ou 11.

2. Article selon la revendication 1 dans lequel le composant polymère est constitué essentiellement de 75 à 100% en poids de Nylon-11 ou de Nylon-12 ou d'un de leurs mélanges et de 0 à 25% en poids de Nylon-6, Nylon-6,6, Nylon-6,9, Nylon-6,10 ou Nylon-6,12 ou d'un mélange de deux ou plusieurs d'entre eux.

3. Article selon la revendication 1 ou 2 qui est creux et thermorétractable et qui a sur sa surface intérieure un revêtement d'un matériau qui coule à la température de rétablissement de l'article.

4. Procédé pour la fabrication d'un article réticulé comme revendiqué dans l'une quelconque des revendications 1 à 3, lequel procédé comprend les étapes de:

(1) façonnage à l'état fondu d'une composition polymère comprenant:
(a) un composant polymère organique qui comprend au moins 80%, de préférence au moins 90% en poids d'au moins un polyamide constitué essentiellement de motifs monomères qui sont liés entre eux par des liaisons amides, au moins 25%, de préférence au moins 75% en poids des motifs monomères ayant pour formule:

$$—NH—(CH_2)_p—CO—$$

dans laquelle p est 10 ou 11; et
(b) un agent insaturé de réticulation par radiation dudit polymère; et
(2) irradiation de l'article façonné préparé dans le stade (1) pour effectuer sa réticulation.

5. Procédé selon la revendication 4 dans lequel l'irradiation est effectuée dans l'air.

6. Procédé selon la revendication 4 ou 5 dans lequel l'agent réticulant est un composé comprenant des éléments choisis parmi le carbone, l'hydrogène, l'oxygène et l'azote, en particulier l'isocyanurate de triallyle ou le cyanurate de triallyle ou un de leurs mélanges.

7. Procédé selon la revendication 4, 5 ou 6 dans lequel la quantité dudit agent réticulant est inférieure à 4%, de préférence inférieure à 2% en poids par rapport au poids du composant polymère organique.

8. Procédé selon la revendication 7 dans lequel l'article façonné est irradié à une dose d'au plus 12 Mrad, de préférence d'au plus 8 Mrad.

9. Procédé selon l'une quelconque des revendications 4 à 8 qui comprend de plus les étapes de:

(3) chauffage de l'article réticulé au-dessus de son point de fusion;
(4) déformation de l'article alors qu'il est à une température supérieure à son point de fusion; et
(5) refroidissement de l'article alors qu'il est à l'état déformé;
pour préparer ainsi un article thermorétractable.